# EUROPEAN PATENT SPECIFICATION

(11) **EP 4 179 934 B1**
(45) Date of publication and mention of the grant of the patent: **02.04.2025**
(21) Application number: 21208481.8
(22) Date of filing: 16.11.2021
(51) Int. Cl.: A47J 43/07, A23G 9/12

(54) **JAR WITH A TOOL HOLDER, A WALL COMPONENT AND A COOLER ELEMENT, AND BLENDER WITH SUCH JAR**
BEHÄLTER MIT EINEM WERKZEUGHALTER, EINEM WANDTEIL UND EINEM KÜHLELEMENT UND MIXER MIT SOLCH EINEM BEHÄLTER
BOCAL AVEC PORTE-OUTILS, COMPOSANT MURAL ET ÉLÉMENT DE REFROIDISSEMENT, ET MÉLANGEUR DOTÉ DUDIT BOCAL

(43) Date of publication of application: 17.05.2023
(73) Proprietor: BSH Hausgeräte GmbH, 81739 München (DE)
(72) Inventor: Koscak, Ales, 6230 Postojna (SI); Orbanic, Henri, 1000 Ljubljana (SI)

(56) References cited:
- EP-A1- 3 369 353
- EP-A1- 3 692 799
- DE-A1- 3 806 508
- US-A- 4 205 535
- US-A- 4 696 166

## Description

The present invention concerns a jar comprising a tool holder, a wall component and a cooler element. The invention further concerns a (stationary) blender with a base and such jar.

Conventional blenders are devised for domestic use and typically comprise a jar and a base. The jar usually is composed of a knife holder configured to hold a blade assembly and forming a bottom of the jar, and a wall component detachably combinable to the knife holder so as to form the jar. The base comprises an electric motor and defines an operation position for the jar. In this position of the jar, the blade assembly held by the knife holder is coupled to the electric motor which thus is adapted to rotate the blade assembly. Thereby, food may be chopped, mixed and/or liquefied. Kitchen appliances with an additional cooling element are known, for example, from EP 3369353 A1, US 4205535 A, DE 3806508 A1, US 4696166 A and EP 3692799 A1.

It is an object of the present invention to provide a jar and a blender, which are improved so as to facilitate a simple and convenient preparation of a broadened class of foods.

The object is achieved by a jar according to claim 1, and by a blender according to claim 7.

Advantageous embodiments are disclosed in the dependent claims, the description and the figures.

A jar according to the present invention belongs to a blender or is configured to form part of a blender. The jar comprises a tool holder, a wall component and a cooler element, which are detachably combinable. In a combined state (i.e., when the jar has been assembled), they together define a food reception space of the jar, the food reception space designated to receive food to be processed by the blender (in particular, by a tool the tool holder may hold). Therein, the cooler element (i.e., a surface thereof) at least partially delimits the food reception space.

A blender according to the present invention comprises a jar according to an embodiment of the present invention, and a base defining an operation position of the jar and comprising an electric motor. When the jar is positioned at the operation position, the electric motor is coupled with a tool when this is (preferably detachably) fixed to the tool holder.

The cooler element is designated to be put - prior to its utilisation - in a cooling environment such as a household refrigerator or a domestic freezer, and thus may be cooled therefrom. As it delimits, after being combined, the food reception space, when food is present in the food reception space, the food may contact the cooler element. The present invention thus facilitates that, if the cooler element has recently been taken out of the cooling environment before assembling and using the jar (along with a base of the blender), the temperature of the food being processed may be lowered due to its contact with the cooler element. Therefore, the present invention provides a convenient and easily employable passive cooling means for preparing, in a domestic environment, cool stirred and/or ground food such as frosty smoothies.

The cooler element comprises one or more double-walled regions including a chamber which may contain a solution (such as salt water and/or urea) freezing at a temperature below 0°C. In particular, the cooler element may preferably contain a latent heat accumulator which can comprise a phase change material.

According to preferred embodiments, the cooler element is ring-shaped.

The tool holder, the wall component and/or the cooler element may comprise means for a frictional connection (e.g., a (respective) screw thread) and/or means for a form-fit connection (such as at least one snap-lock means and/or at least one bayonet joint), which respectively may provide for detachably combining said components. In particular, the wall component, the cooler element and/or the tool holder may respectively comprise at least one fixation element (such as a pin, a screw thread and/or a cavity) configured to engage with at least one fixation element (such as a pin, a screw thread and/or a cavity) of a respective other one of the wall component, the cooler element and/or the tool holder.

Preferably, the cooler element at least partially delimits the food reception space in a bottom region thereof. For instance, it may at least partially delimit a lowest third or even a lowest fourth of the food reception space; in this document, the terms "bottom" and "low" and its derivatives each relate to an orientation designated for processing food in the assembled jar. In particular, a cooler element's surface delimiting the food reception space may advantageously at least partially abut a tool holder's surface facing (and also delimiting) the food reception space.

According to the invention, the cooler element is detachably fixable to the tool holder so as to build a bottom part of the jar, and the wall component is then detachably fixable to the bottom part, in particular to the tool holder and/or to the cooler element thereof. Therein, the cooler element may be detachably fixable to the tool holder by means of at least one screw connection and/or at least one form-fit connection, such as at least one snap-lock means and/or at least one bayonet joint. Additionally or alternatively, the wall component may be detachably fixable to the bottom part by means of a screw connection or a form-fit connection, such as at least one snap-lock means and/or at least one bayonet joint.

Such embodiments facilitate a particularly comfortable and quick assembly of the jar.

The wall component may form a pipe with a first end and a second end, the first end surrounding a feed opening of the jar (i.e., through which in use of the jar food to be processed may be filled into the food reception space), the second end surrounding an opening configured to receive the tool holder and/or the cooler element when the wall component is combined thereto. The jar may also be shaped so that its horizontal section is not a circle or a circle-like shape but can also be a polygonal shape, for instance a hexagonal.

According to advantageous embodiments, in a combined state of the tool holder, the wall component and the cooler element, the cooler element is at least partially (in particular, entirely) surrounded by the wall component. In particular, the cooler element may be inserted in said opening at said second end of the wall component.

According to advantageous embodiments, the tool holder and the wall component are detachably combinable for use selectively with or without the cooler component. That is, the tool holder and the wall component are configured to be combined to each other even when omitting the cooler element, thus forming a components-reduced jar with a sealed further food reception space (which is enlarged as compared to the food reception space formed using the cooler element). Such embodiments facilitate utilisation of the blender

(for processing food not to be cooled) also without the cooler element, for example while the cooler element is deposited in a cooling environment (such as a refrigerator or a freezer).

A surface (of the jar) which at least partially delimits the food reception space may preferably have a profile comprising one or more protrusions (i.e. flow breaking elements). In use of the blender, such a profile may serve to obstruct food being processed by a rotating tool, and to redirect it towards the tool. Preferably, at least one of such protrusions may extend over both a surface of the wall component and a cooler element's surface delimiting the food reception space.

In the following, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not defined again for each figure.

Shown is schematically in
- Fig. 1a:: an exemplary embodiment of a jar according to the present invention in a disassembled state;
- Fig. 1b:: the jar of Figure 1a in a partially assembled state;
- Fig. 1c: the jar of Figures 1a and 1b in an assembled state;
- Fig. 2a:: a sectional view of the jar of Figures 1a to 1c;
- Fig. 2b:: an view from above into the food reception space of the jar; and
- Fig. 3:: the setup of a blender according to an exemplary embodiment of the present invention.

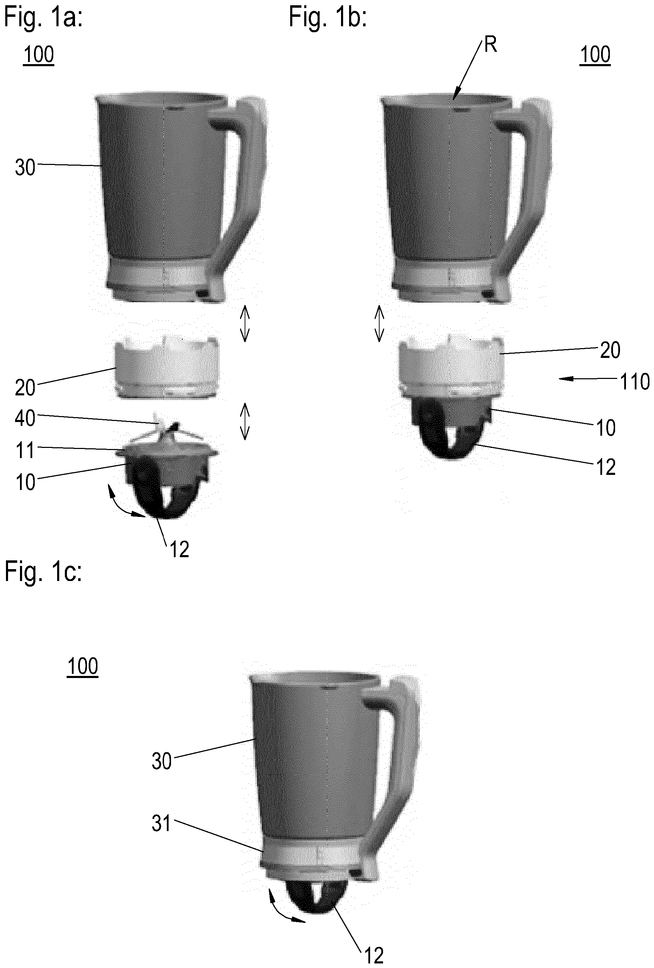

Figures 1a, 1b and 1c show a jar 100 according to an exemplary embodiment of the present invention in different states. The jar 100 comprises a tool holder 10, a cooler element 20 and a wall component 30. In the present case, the cooler element 20 is ring-shaped, and a tool being a rotatable blade assembly 40 is held by the tool holder 10. Preferably, the blade assembly 40 is detachably mounted to the tool holder 10. In particular, the tool holder 10 may advantageously be configured to selectively hold one of various tools, which may comprise different blade assemblies and/or beaters (not shown).

The cooler element 20 may advantageously comprise at least one double walled region encasing a solution which freezes in a fridge and/or a household freezer. According to the invention, the cooler element 20 comprises a phase-change material.

Figure 1a shows the tool holder 10, the cooler element 20 and the wall component 30 in an uncombined, i.e., disassembled state, whereas Figure 1b depicts a situation in which the cooler element 20 is detachably fixed to the tool holder 10. Such combined, the tool holder 10 and the cooler element 20 together form a bottom part 110 of the jar 100. Preferably, the cooler element 20 is detachably fixable to the tool holder 10 by means of a screw fitting, or by means of a form-fit connection such as a snap-lock and/or a bayonet joint (not visible in the figures). In the example shown in Figures 1a to 1c, a seal ring 11 is configured to seal a contact region of the tool holder 10 and the cooler element 20 and/or a contact region of the tool holder 10 and the wall component 30.

For further assembling the jar 100, the wall component 30 is detachably fixable (such as by means of a screw fitting, or by means of a form-fit connection such as a snap-lock and/or a bayonet joint) to the bottom part 110, in particular to the tool holder 10 and/or to the cooler element 20 thereof.

Figure 1c shows the jar 100 in such an assembled state, in which the tool holder 10, the cooler element 20 and the wall component 30 are combined. Therein, in the embodiment shown, the cooler element 20 and the tool holder 10 are inserted in a bottom portion 31 of the wall component 30. In particular, the wall component 30 surrounds the ring-shaped cooler element 20. A pivotable handle 12 permits a user to easily grip and operate the bottom part 110 when fixing the wall component 30 to it, which fixing may comprise a linear and/or a rotational movement of the tool holder 10 relative to the wall component 30.

Thereafter, the handle 12 may be pivoted so as to also be plunged in the bottom portion 31 of the wall component 30.

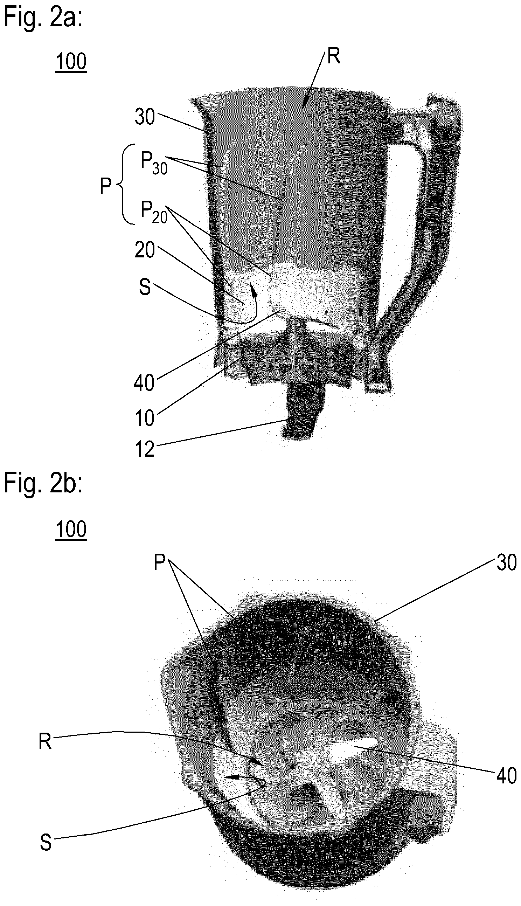

In the combined state, the tool holder 10, the cooler element 20 and the wall component 30 together define a food reception space R of the jar 100, as is better shown in Figures 2a and 2b each providing a view in the jar 100 and, thereby, in the food reception space R.

In Figure 2a, a sectional view of the jar 100 formed by the tool holder 10, the cooler element 20 and the wall component 30 in their combined state is presented, and Figure 2b shows the jar 100 with its food reception space R from above (with respect to an orientation designated for processing food in the jar). As can be taken from both Figure 2a and Figure 2b, a bottom of the food reception space R is at least partially defined by the tool holder 10, and both the wall component 30 and the cooler element 20 (in particular, a surface S thereof) further delimit the food reception space R by together forming a lateral jacket of the jar.

As can be further taken from Figures 2a and 2b, at a surface delimiting the food reception space R, the jar 100 has a profile comprising protrusions P extending over both the wall component 30 and the cooler element 20. Indeed, the protrusions P each have a section P₃₀ in which they are formed by the wall component 30, and a section P₂₀ in which they are formed by the cooler element 20. The protrusions P may serve to obstruct food when this is being processed by the rotating blade assembly 40, and to redirect it towards the blade assembly 40. Moreover, as the cooler element 20 is thickened in its sections P₂₀ of the protrusions P, these sections P₂₀ may provide for a particularly good capacity of holding cold.

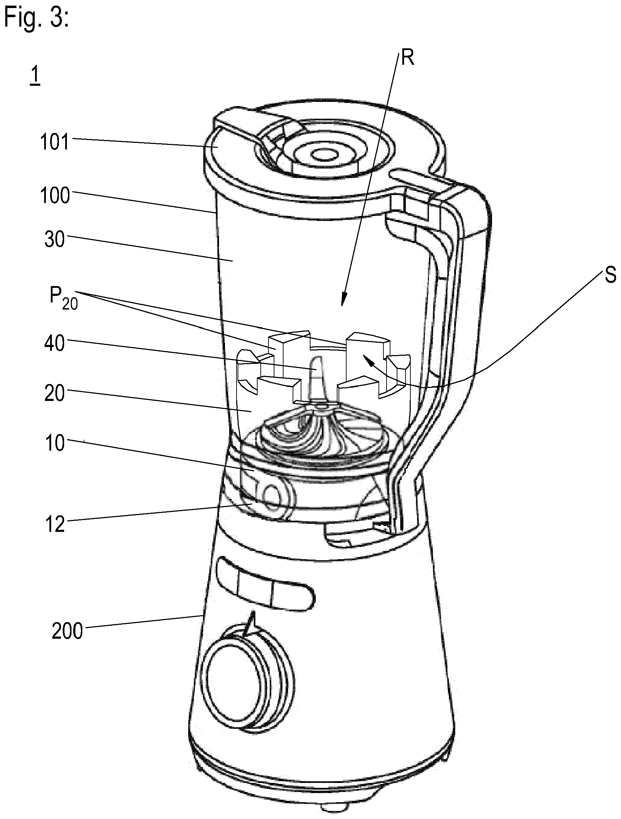

Figure 3 schematically illustrates the setup of a blender 1 according to an exemplary embodiment of the present invention. The blender 1 comprises a jar 100 and a base 200 containing an electric motor (not visible in Figure 3). To indicate the cooler element 20 and the blade assembly 40 thereof, in Figure 3, the jar 100 and the cooler element 20 are depicted as partially transparent. However, to improve clarity of the figure, a representation of the wall component's surface delimiting the food reception space R (with the sections P₃₀ of the protrusions P shown in Figure 2a, 2b) is omitted.

In Figure 3, the jar 100 is shown as being set in an operation position after the pivotable handle 12 has been swivelled so as to unblock a bottom surface of the jar 100. In the operation position, the electric motor is coupled with the blade assembly 40.

In use, the cooler element 20 may advantageously be combined, with the tool holder 10 and the wall component 30, after having been stored in a fridge or a household freezer, such as for several hours. Due to the cooler element 20 delimiting, with its surface S, the food reception space R of the assembled jar 100, food being processed in the jar 100 is then cooled by the cooler element 20. Thereby, cold drinks, in particular smoothies can be easily and conveniently made even in a domestic environment.

Disclosed is a jar 100 for or of a blender 1. The jar comprises a tool holder 10, a wall component 30 and a cooler element 20 which are detachably combinable such that, in a combined state, they define a food reception space R designated to receive food to be processed by the blender 1. Therein the cooler element 20 at least partially delimits the food reception space R.

Further disclosed is a (stationary) blender 1 with such jar 100 and a base 200, the base defining an operation position of the jar 100 and comprising an electric motor.

### Reference signs

- 1: blender

- 10: tool holder
- 11: seal ring
- 12: handle

- 20: cooler element

- 30: wall component
- 31: bottom part

- 40: blade assembly

- 100: jar
- 110: bottom part

- 200: base

- P: protrusion
- P₂₀, P₃₀: section of protrusion P
- R: food reception space
- S: surface of cooler element

## Claims

1. Jar (100) for a blender (1), the jar comprising a tool holder (10), a wall component (30) and a cooler element (20) which are detachably combinable such that, in a combined state, they define a food reception space (R) designated to receive food to be processed by the blender (1), wherein the cooler element (20) at least partially delimits the food reception space (R)**characterised in that** the cooler element (20) comprises at least one double walled region encasing a phase-change material and **in that** said cooler element (20) detachably fixable to the tool holder (10) so as to build a bottom part (110) of the jar, and the wall component (30) is detachably fixable to the bottom part (110).

2. Jar according to claim1, wherein the cooler element (20) is detachably fixable to the tool holder (10) by means of a form-fit connection, in particular by means of at least one snap-lock means and/or at least one bayonet joint.

3. Jar according to one of the preceding claims, wherein the cooler element (20) is ring-shaped.

4. Jar according to one of the preceding claims, wherein in said combined state, the cooler element (20) is at least partially surrounded by the wall component (30).

5. Jar according to one of the preceding claims, wherein the tool holder (10) and the wall component (30) are combinable for use selectively with or without the cooler component (20).

6. Jar according to one of the preceding claims, wherein at a surface delimiting the food reception space, the jar has a profile comprising one or more protrusions (P) extending over both the wall component (30) and the cooler element (20).

7. Blender (1) with a jar (100) according to one of the preceding claims, and with a base (200) comprising an electric motor and defining an operation position for the jar, in which operation position the electric motor is configured to be coupled with a tool (40) fixed to the tool holder (10).

## Patentansprüche

1. Behälter (100) für einen Mixer (1), wobei der Behälter einen Werkzeughalter (10), ein Wandteil (30) und ein Kühlelement (20) umfasst, die derart lösbar kombinierbar sind, dass sie in einem kombinierten Zustand einen Lebensmittelaufnahmeraum (R) definieren, der dazu bestimmt ist, durch den Mixer (1) zu verarbeitende Lebensmittel aufzunehmen, wobei das Kühlelement (20) den Lebensmittelaufnahmeraum (R) zumindest teilweise begrenzt, **dadurch gekennzeichnet, dass** das Kühlelement (20) mindestens einen doppelwandigen Bereich umfasst, der ein Phasenwechselmaterial umschließt, und dadurch, dass das Kühlelement (20) lösbar an dem Werkzeughalter (10) befestigbar ist, um ein Unterteil (110) des Behälters zu schaffen, und das Wandteil (30) lösbar an dem Unterteil (110) befestigbar ist.

2. Behälter nach Anspruch 1, wobei das Kühlelement (20) durch eine formschlüssige Verbindung, insbesondere durch mindestens einen Schnappverschluss und/oder mindestens einer Bajonettverbindung, lösbar an dem Werkzeughalter (10) befestigbar ist.

3. Behälter nach einem der vorhergehenden Ansprüche, wobei das Kühlelement (20) ringförmig ist.

4. Behälter nach einem der vorhergehenden Ansprüche, wobei in dem kombinierten Zustand das Kühlelement (20) zumindest teilweise durch das Wandteil (30) umgeben ist.

5. Behälter nach einem der vorhergehenden Ansprüche, wobei der Werkzeughalter (10) und das Wandteil (30) zur Verwendung wahlweise mit oder ohne das Kühlteil (20) kombinierbar sind.

6. Behälter nach einem der vorhergehenden Ansprüche, wobei der Behälter an einer den Lebensmittelaufnahmeraum begrenzenden Fläche ein Profil aufweist, das einen oder mehrere Vorsprünge (P) umfasst, die sich sowohl über das Wandteil (30) als auch über das Kühlelement (20) erstrecken.

7. Mixer (1) mit einem Behälter (100) nach einem der vorhergehenden Ansprüche und mit einer Basis (200), die einen Elektromotor umfasst und eine Betriebsposition für den Behälter definiert, wobei der Elektromotor in der Betriebsposition dazu konfiguriert ist, mit einem Werkzeug (40) gekoppelt zu sein, das an dem Werkzeughalter (10) befestigt ist.

## Revendications

1. Pot (100) pour un mélangeur (1), le pot comprenant un support d'outil (10), un composant de paroi (30) et un élément de refroidissement (20) qui peuvent être combinés de manière à pouvoir être détachés de sorte que, sous un état combiné, ils définissent un espace de réception d'aliment (R) désigné pour recevoir un aliment à transformer par le mélangeur (1), dans lequel l'élément de refroidissement (20) délimite au moins partiellement l'espace de réception d'aliment (R) **caractérisé en ce que** l'élément de refroidissement (20) comprend au moins une région à double paroi enchâssant un matériau à changement de phase et **en ce que** ledit élément de refroidissement (20) peut être fixé de manière à pouvoir être détaché au support d'outil (10) afin de construire une partie inférieure (110) du pot, et que le composant de paroi (30) peut être fixé de manière détachable à la partie inférieure (110).

2. Pot selon la revendication 1, dans lequel l'élément de refroidissement (20) peut être fixé de manière détachable au support d'outil (10) à l'aide d'un raccordement par complémentarité de forme, en particulier à l'aide d'au moins un moyen de verrouillage à cliquet et/ou au moins une articulation à baïonnette.

3. Pot selon l'une des revendications précédentes, dans lequel l'élément de refroidissement (20) a une forme d'anneau.

4. Pot selon l'une des revendications précédentes, dans lequel dans ledit état combiné, l'élément de refroidissement (20) est au moins partiellement entouré par le composant de paroi (30).

5. Pot selon l'une des revendications précédentes, dans lequel le support d'outil (10) et le composant de paroi (30) peuvent être combinés pour l'utilisation sélectivement avec ou sans l'élément de refroidissement (20).

6. Pot selon l'une des revendications précédentes, dans lequel au niveau d'une surface délimitant l'espace de réception d'aliment, le pot présente un profil comprenant une ou plusieurs protubérances (P) s'étendant sur à la fois le composant de paroi (30) et l'élément de refroidissement (20).

7. Mélangeur (1) ayant un pot (100) selon l'une des revendications précédentes, et ayant une base (200) comprenant un moteur électrique et définissant une position de fonctionnement du pot, dans laquelle position de fonctionnement, le moteur électrique est configuré pour être accouplé à un outil (40) fixé au support d'outil (10).
